# EUROPÄISCHE PATENTSCHRIFT

(11) **EP 1 446 209 B1**
(45) Veröffentlichungstag und Bekanntmachung des Hinweises auf die Patenterteilung: **26.03.2008**
(21) Anmeldenummer: 02803003.9
(22) Anmeldetag: 11.11.2002
(51) Int. Cl.: B01D 11/00, C11B 1/10

(54) **VERFAHREN ZUR EXTRAKTION VON INHALTSSTOFFEN AUS ORGANISCHEM MATERIAL**
METHOD FOR THE EXTRACTION OF COMPONENTS MADE FROM ORGANIC MATERIAL
PROCEDE D'EXTRACTION DE COMPOSANTS A PARTIR D'UNE MATIERE ORGANIQUE

(30) Priorität: 13.11.2001 DE 10155517; 29.01.2002 DE 10203551
(43) Veröffentlichungstag der Anmeldung: 18.08.2004
(73) Patentinhaber: Metanomics GmbH & Co. KGaA, 10589 Berlin-Charlottenburg (DE)
(72) Erfinder: HEROLD, Michael, Manfred, 10589 Berlin (DE); DOSTLER, Martin, 16761 Henningsdorf (DE); LOOSER, Ralf, 10589 Berlin (DE); WALK, Tilmann, B., 10627 Berlin (DE); FEGERT, Achim, 67117 Limburgerhof (DE); KLUTTIG, Martin, 13585 Berlin (DE); LEHMANN, Britta, 12247 Berlin (DE); HEIDEMANN, Silke, 12159 Berlin (DE); HENNIG, Annette, 15831 Mahlow (DE); KOPKA, Joachim, 10405 Berlin (DE)
(86) Internationale Anmeldenummer: PCT/EP2002/012551
(87) Internationale Veröffentlichungsnummer: WO 2003/041834

(56) Entgegenhaltungen:
- EP-A- 0 290 156
- DE-A- 4 342 625
- US-A- 2 154 713
- US-A- 3 207 744
- US-A- 4 496 426

## Beschreibung

Die vorliegende Erfindung betrifft ein Verfahren zur Extraktion von Inhaltsstoffen aus organischem Material, umfassend den Schritt Extrahieren mit einem einphasigen Gemisch aus 50 Vol.-% bis 90 Vol.-% Methanol und 50 bis 10 Vol.-% Wasser und optional 0 Vol.-% bis 40 Vol.-% eines weiteren Lösungsmittels oder Lösungsmittelgemisches. In einer Ausführungsform ist das Verfahren Teil eines Verfahrens zur Analyse eines metallischen Profils.

Das Verständnis der biochemischen Synthesewege im Metabolismus von tierischen oder pflanzlichen Zellen, einschließlich Mikroorganismen, wie Bakterien, Pilze, Algen, oder Säugetierzellen, ist trotz Kenntnis der Hauptsynthesewege noch sehr rudimentär. Die Bestimmung von physiologischen Zuständen während Wachstum, Entwicklung oder als Reaktion auf Umweltstress ist bis heute im wesentlichen auf die Untersuchung einzelner Zielmoleküle, wie z.B. RNA und Proteine, beschränkt. Änderungen des mRNA-oder Proteinlevels oder deren Aktivität können jedoch häufig nicht mit Änderungen im Stoffwechsel oder gar mit phänotypischen Funktionen korreliert werden.

Die direkte Analyse von zellulären Inhaltsstoffen oder Metaboliten erfolgt häufig entweder durch spezifische enzymatische Reaktionen, Immunoassays oder auf der Grundlage von chromatographischen Verfahren, die anhand von Retentionszeiten oder Koelutionen mit Referenzsubstanzen bestimmte Stoffe identifizieren. Wie in Katona, J. Chromatography 1999, 847, 91-102 beschrieben, behandelt ein Großteil des Stands der Technik nur die Analyse von wenigen, spezifischen Komponenten, z.B. Säuren oder Zucker. Die meisten bekannten Verfahren beschränken eine umfassende biochemische Analyse dadurch, dass sie (a) nicht offen sind, d.h. es können nur Informationen über bereits bekannte Metaboliten gewonnen werden, (b) sehr arbeitsintensiv sind, da ihnen oft Einzeltests zugrunde liegen, (c) sie nur eine sehr geringe Auflösung besitzen, somit nur ein Profil von sehr geringer Komplexität und geringem Informationsgehalt erhalten werden kann, (d) nur Metaboliten einer Zelle nur in einem Status, beispielsweise einer Wachstumsphase oder unter Einfluss eines Stressfaktors, erfassen und somit dynamische Änderungen in der Zelle nicht verfolgt werden können oder (e) nur wenige der im Organismus vorhandenen Substanzklassen erfassen, z.B. nur Zucker oder nur Fettsäuren, oder nur bestimmte Molekulargewichte, nicht jedoch die breite Palette polarer oder unpolarer Substanzen. Erst in Anfängen ist gezeigt, dass Stoffwechselprodukte oder Metaboliten nicht nur Zwischen- oder Endprodukte darstellen, sondern auch als Sensoren und Regulatoren wirken.

Die umfassende und quantitative Bestimmung der in einer organischen Probe vorhandenen Metaboliten und Inhaltsstoffe, (unabhängig davon, ob sich diese Bestimmung auf verschiedene Substanzklassen, Entwicklungsstufen oder Materialtypen beschränkt, d.h. unabhängig davon ob es sich um ein Metabolic Fingerprinting, Metabolic Profiling oder Metabolomics handelt) ermöglicht die direkte Untersuchung von unmittelbaren Wachstums-, Entwicklungs- oder Stresseinflüssen auf den gesamten Organismus oder Teilen davon und ist somit als wesentlicher Teil der funktionalen Genomanalyse bei der Bestimmung von Gen-Funktionen hilfreich. Verfahren zur Analyse von Metaboliten-Profilen, insbesondere wenn sie zur Analyse von größeren Probenzahlen geeignet sind, erlauben die Komplexität der regulatorischen Wechselwirkungen auf allen Ebenen und in allen Stadien zu untersuchen und nicht zuletzt die Sicherheit und den Wert von genetisch veränderten Organismen zu beurteilen.

Am meisten fortgeschritten ist die Bestimmung von komplexen Metaboliten-Profilen in diagnostischen Screens, jedoch wurden kürzlich auch erste Profile von Pflanzen beschrieben (für eine Übersicht s. Trethewey, Curr. Opin. Plant. Biol. 1999, 2, 83-85). So zeigt Sauter (ACS Symposium Series 1991, 443 (Synth. Chem. Agrochem. 2), American Chemical Society, Washington, DC, 288-299) die Veränderung von Inhaltsstoffen in Gerste nach Behandlung mit verschiedenen Herbiziden. Als vorteilhaftes Verfahren beschreibt Sauter, dass gefrorene Pflanzenproben gewogen und mit 100 % Ethanol extrahiert wurden. Nach Filtration, Trocknung und Silylierung können die Proben über Kapillarsäulen aufgetrennt werden. Zwischen 100 und 200 Signale konnten detektiert werden und mit Hilfe von Referenzsubstanzen über ihre Retentionskoeffizienten in der Gaschromatographie (GC) oder über Gaschromatographie-Massenspektrometrie-Analyse (GC/MS) identifiziert werden.

Fiehn, Nature Biotechnology 2000, 18, 1157-1161, beschreibt die Quantifizierung von 326 Substanzen in Arabidopsis thaliana Blattextrakten. Für den Vergleich von vier verschiedenen Genotypen wurden in einem aufwendigen Verfahren gefrorene Pflanzenproben homogenisiert, in 97 % Methanol unter kurzzeitigem Erhitzen extrahiert und nach Zugabe von Chloroform und Wasser in mehreren Schritten eine polare und eine unpolare Phase gewonnen, die dann per LC/MS und GC/MS analysiert wurden (s.a. Fiehn, Anal. Chem. 2000, 72, 3573-3580; http://www.mpimp-golm.mpg.de/fiehn/blatt-protokoll-e.html). Nach einem sehr ähnlichen Verfahren werden von Roessner, The Plant Journal 2000, 23, 131-142, Pflanzeninhaltsstoffe in Methanol extrahiert und die Profile polarer Metaboliten von in vitro und von in Erde gezogenen Kartoffelpflanzen miteinander verglichen.

Gilmour, Plant Physiology 2000, 124, 1854-1865 extrahiert Zucker aus lyophilisierten Arabidopsis Blättern in 80 % Ethanol nach Inkubation für 15 min bei 80°C und Inkubation über Nacht bei 4°C. Ebenfalls bei 80°C, für 30 min und in 80 % Ethanol mit Hepes, pH 7,5, extrahiert Strand, Plant Physiology 1999, 119, 1387-1397, zwei mal nacheinander lösliche Zucker und Stärke. Bei dieser hohen Temperatur wird dann noch zweimal extrahiert, um das Extraktionsergebnis zu verbessern, und zwar einmal mit 50 % Ethanol-Hepes, pH 7,5 und einmal mit Hepes, pH 7,5.

Die im Stand der Technik beschriebenen Verfahren lassen nur eine beschränkte Automatisierung zu, die zudem nur mit einem hohen technischen Aufwand zu verwirklichen ist. Insbesondere die Erfassung großer Probenzahlen, die Bestimmung des Einflusses von vielfältigen Stressfaktoren auf den Metabolismus der Organismen oder die Beobachtung dynamischer Prozesse, die eine kontinuierliche Analyse von Proben in häufig sehr kleinen Zeitfenstern erfordert, bedingen Verfahren,
(a) die schnell sind, d.h. beispielsweise, dass die Probenfixierung und -analyse innerhalb einer kurzen Zeitspanne nach der Probengewinnung erfolgt,
(b) die hochreproduzierbar sind, d.h. beispielsweise, dass eine Analyse über viele verschiedene Proben Ergebnisse innerhalb einer geringen Fehlerbreite liefert,
(c) die einfach zu handhaben sind, d.h. beispielsweise, dass das Verfahren automatisierbar und ohne hohen technischen oder personellen Aufwand betreibbar ist,
(d) die offen sind, d.h. beispielsweise, dass eine große Anzahl an Substanzen analysierbar ist, und/oder
(e) die sensitiv sind, d.h. beispielsweise, dass die Analyse auch geringe Änderungen in Substanzkonzentrationen und geringe Substanzmengen erfasst.

Viele Verfahren haben den Nachteil, dass sie sich nur für die Analyse kleiner Probenzahlen eignen. Bei einer größeren Anzahl an Proben kann die Stabilität der Proben und somit die Reproduzierbarkeit der Ergebnisse nicht gewährleistet werden. Eine umfassende kontinuierliche Analyse von biologischem Material, z.B. tierische Proben oder Pflanzenproben, oder z.B. die Wechselwirkung zwischen Substanz(en) und Organismen in komplexen Systemen und ihr zeitlicher Verlauf ist somit nicht möglich.

Das technische Problem, das der vorliegenden Erfindung zugrunde lag, war daher, ein Verfahren zu finden, das es erlaubt, die oben genannten Nachteile der im Stand der Technik bekannten Verfahren zu überwinden und das es ermöglicht, eine größere Anzahl an Proben mit einer hohen Sensitivität und Reproduzierbarkeit schnell und einfach zu analysieren.

Die Lösung des Problems wird durch die in den Ansprüchen der vorliegenden Erfindung charakterisierten Ausführungsformen zur Verfügung gestellt.

Folglich betrifft die Anmeldung ein Verfahren zur Extraktion von Inhaltsstoffen aus organischem Material, umfassend die Schritte
(a) Extrahieren des organischen Materials oder eines Teils davon mit einem einphasigen Gemisch aus 50 Vol.-% bis 90 Vol.-% Methanol und 50 Vol.-% bis 10 Vol.-% Wasser und optional 0 Vol.-% bis 40 Vol.-% eines weiteren Lösungsmittels oder Lösungsmittelgemisches;
(b) Extrahieren des organischen Materials oder eines Teils davon mit einem einphasigen unpolaren Lösungsmittel oder Lösungsmittelgemisch, wobei der Polaritätsindex nach Kellner des unpolaren Lösungsmittels oder Lösungsmittelgemisches um 0,3 oder mehr kleiner ist als der des Extraktionsmittels der polaren Phase in Schritt (a); und
(c) vereinigen der Extrakte aus Schritt (a) und aus Schritt (b) zu einem einphasigen Gemisch.
Weitere Lösungsmittel oder Lösungsmittelgemische sind unten aufgeführt.

Unter dem Begriff "organisches Material" wird jedes organische oder biologische Material verstanden, wie Material von Pflanzen, Tieren, Mikroorganismen, beispielsweise von Protisten, Pilzen, Bakterien, Algen, Viren etc., z.B. aus Kulturmaterial abgetrennte Organismen, Körperflüssigkeiten wie Blut, Lymphe, Sekrete oder Nahrungsmittel, Futtermittel und sonstige tierische oder pflanzliche Erzeugnisse. Ebenso wird darunter Kulturmaterial verstanden, in dem Organismen leben, d.h. bspw. auch nach Abtrennung der Organismen, z.B. Medien zur Aufzucht von Mikroorganismen, wie Protisten, z.B. Kinetoplasten, Plasmodien, oder Bakterien, z.B. gram positiven oder gram negativen Bakterien, oder Algen, Pilzen, z.B. Hefen, oder tierischen oder pflanzlichen Zellen.

Unter dem Begriff "Extraktion" oder "Extrahieren" wird erfindungsgemäß verstanden, dass aus einer festen oder flüssigen Probe mit unpolaren bis polaren Lösungsmitteln oder Lösungsmittelgemischen die darin enthaltenen Substanzen, z.B. Inhaltsstoffe aus organischem Material, in das jeweilige Lösungsmittel oder Lösungsmittelgemisch überführt werden. In einem polaren Lösungsmittel wie z.B. Wasser, lösen sich die hydrophilen Inhaltsstoffe, z.B. auch Metaboliten, in einem lipophilen

Lösungsmittel werden die hydrophoben Inhaltsstoffe, z.B. auch Metaboliten, des Materials gelöst.

Unter "polaren Lösungsmitteln oder Lösungsmittelgemischen" werden im folgenden Lösungsmittel oder Lösungsmittelgemische mit einem Polaritätsindex von 4 bis 10,2, vorzugsweise von 5 bis 7, mehr bevorzugt von 5, 5 bis 6, 5 nach Kellner, Analytical Chemistry, Weinheim, 1998, S. 195 verstanden. Polare Lösungsmittel sind z.B. Wasser, inklusive wässrige Lösungen, oder polare aprotische oder protische organische Lösungsmittel, bspw. Alkylalkohole mit einem Alkylrest mit 1 bis 6 Kohlenstoffatomen, z.B. Methanol, Ethanol, 1-Propanol, 2-Propanol, Butanol, Pentanol, Hexanol oder z.B. Aceton, Acetonitril, Essigsäureethylester, Dimethylsulfoxid oder N.N-Dimethylformamid, oder andere Lösungsmittel mit einer Polarität größer als oder gleich 0,50, wie z.B. angegeben in Küster/Thiel, Rechentafeln für die Chemische Analytik, Walter de Gruyter, Berlin/New York 1993, S. 359 oder sind Gemische davon. Ein erfindungsgemäß eingesetztes Lösungsmittelgemisch aus 80 % Methanol/20 % Wasser hat z.B. den Polaritätsindex von 6,1 gemäß Kellner, 1998.

Unter "unpolaren Lösungsmitteln oder Lösungsmittelgemischen" werden im folgenden Lösungsmittel oder Lösungsmittelgemische verstanden, die einen Polaritätsindex nach Kellner, Analytical Chemistry, Weinheim, 1998, S. 195 haben, der 0,3 oder mehr kleiner ist als der des Extraktionsmittels der polaren Phase. Mehr bevorzugt ist der Polaritätsindex nach Kellner, 1998 0,5, noch mehr bevorzugt 1, am meisten bevorzugt um mehr als 2 kleiner als der des Extraktionsmittels der polaren Phase. Ein erfindungsgemäß eingesetztes Lösungsmittelgemisch aus 40 % Methanol/60 % Dichlormethan hat so z.B. einen Polaritätsindex von 3,9 nach Kellner, 1998. "Unpolare Lösungsmittel" sind z.B. organische Lösungsmittel, bspw. halogenhaltige Lösungsmittel wie Chloroform, Dichlormethan, Tetrachlorkohlenstoff oder aliphatische Lösungsmittel wie Hexan, Cyclohexan, Pentan, Heptan etc. oder aromatische Lösungsmittel, wie z.B. Toluol oder Benzol, oder Ether, wie z.B. tert.-Butylmethylether, Diethylether oder Tetrahydrofuran oder andere Lösungsmittel mit einer Polarität kleiner als 0, 50 , wie z.B. angegeben in Küster/Thiel 1993 oder Gemische davon.

Unter einer "polaren Phase" oder einem "polaren Extrakt" wird eine Phase oder ein Extrakt verstanden, die/der aus einer Extraktion mit einem Lösungsmittel oder Lösungsmittelgemisch mit einem Polaritätsindex von 4 bis 10,2, vorzugsweise von 5 bis 7, mehr bevorzugt von 5,5 bis 6,5 nach Kellner, Analytical Chemistry, Weinheim, 1998, S. 195, erhalten wird, oder die/der aus einer Extraktion mit einem polaren Lösungsmittel oder Lösungsmittelgemisch wie oben genannt erhalten wird.

Unter einer "unpolaren Phase" oder einem "unpolaren Extrakt" wird eine Phase oder ein Extrakt verstanden, die/der relativ zu der polaren Phase oder dem polaren Extrakt eine geringere Polarität oder einen geringeren Polaritätsindex aufweist und mit der/dem sich mittel- bis unpolare Stoffe besser extrahieren lassen, wie z.B. bei einer Extraktion mit unpolaren Lösungsmitteln oder Lösungsmittelgemischen wie oben genannt. Erfindungsgemäß wird eine "unpolare Phase" oder ein "unpolarer Extrakt" erhalten durch Extraktion mit einem Lösungsmittel oder Lösungsmittelgemisch mit einem Polaritätsindex nach Kellner, Analytical Chemistry, Weinheim, 1998, S. 195, der 0,3 oder mehr kleiner ist als der des Lösungsmittels oder Lösungsmittelgemisches der polaren Phase oder des polaren Extraktes. Mehr bevorzugt ist der Polaritätsindex 0,5, noch mehr bevorzugt 1,0, am meisten bevorzugt um mehr als 2 kleiner nach Kellner, 1998 als der des Lösungsmittels oder Lösungsmittelgemisches der polaren Phase.

Unter dem Begriff "Inhaltsstoffe" werden polare und unpolare Verbindungen, z.B. "Metaboliten" verstanden, die bei den Abbau-und Aufbaureaktionen (katabolischen oder anabolischen Reaktionen) des Stoffwechsels entstehen oder von Organismen aus ihrer Umgebung aufgenommen werden. Dies betrifft Verbindungen, die zellulär oder in komplexeren Organismen auch extrazellulär, z.B. in Körperflüssigkeiten vorliegen. Bei der Kultur von Mikroorganismen oder anderen Organismen sind auch die Inhaltsstoffe dieser Kulturen, z.B. des Wachstumsmediums, umfasst. Die Konzentration eines Inhaltsstoffes wird durch äußere Einflüsse (Umgebungsbedingungen, Nährstoffbedingungen, Stresssituation) oder durch interne Bedingungen (Entwicklung, Regulationen, genetisch bedingte Veränderungen), denen die Organismen unterliegen, beeinflusst. Der Begriff umfasst sowohl sogenannte Primärmetaboliten als auch Sekundärmetaboliten. Unter "Primärmetaboliten" werden in der Regel solche Metaboliten verstanden, die Produkte von Abbau- und Aufbauwegen sind, die von fundamentaler Bedeutung für die Zelle sind und damit mehr oder weniger für alle Zellen gleich sind. Unter "Sekundärmetaboliten" werden in der Regel Verbindungen verstanden, die zumeist auf Nebenwegen, z.B. bei Stresssituationen, wie Hunger- oder Mangelbedingungen oder nach Abschluss der aktiven Wachstumsphase der Zelle gebildet werden und für die in vielen Fällen keine erkennbare Funktion für die Zelle bekannt ist (s.a. Römpp Lexikon Biotechnologie, New York, 1992). Unter Inhaltsstoffen werden daher z.B. polare oder unpolare Substanzen verstanden, wie Kohlenhydrate, Amine (insbesondere Aminosäuren), Tetrapyrrole, Lipide, Steroide, Nucleotide, Nucleoside, Cofaktoren, Coenzyme, Vitamine, Antibiotika, Hormone, Peptide, Terpene, Alkaloide, Carotinoide, Xanthopylle, Flavöide, etc. und die Substanzen der jeweiligen Stoffwechselwege, ohne dass die obige oder folgende Aufzählung in irgendeiner Form als limitierend anzusehen ist.

Kohlenhydrate umfassen z.B. die Kohlenhydrate des Kohlenhydrat-Stoffwechsels, z.B. der Glykolyse, der Gluconeogenese, z.B. Triosen, Tetrosen, Pentosen, z.B. Furanosen oder Hexosen, z.B. Pyranosen oder Heptosen, des Polysaccharidstoffwechsels, des Pyruvatstoffwechsels, des Acetyl-Coenzym-A-Stoffwechsels, Di-oder Oligosaccharide, Glycoside, Hexosederivate, Desoxy-Hexosen, Kohlenhydrate des Pentosestoffwechsels, des Aminozuckerstoffwechsels, des Citrat-Zyklus des Glyoxylat-Stoffwechsels etc. oder andere Substanzen der jeweiligen Stoffwechselwege.

Aminosäuren umfassen z.B. die Aminosäuren der Aminosäuren-Stoffwechsel, wie z.B. im Ammoniakstoffwechsel, oder des Schwefelstoffwechsels, des Harnstoffzyklus, oder deren Derivate, z.B. aromatische oder nicht-aromatische Aminosäuren, polare, ungeladene, nicht polare, aliphatische, aromatische, positiv geladene, negativ geladene Aminosäuren, verzweigtkettige oder unverzweigtkettige, essentielle oder nicht essentielle Aminosäuren oder andere Substanzen der jeweiligen Stoffwechselwege.

Tetrapyrrole umfassen z.B. Substanzen des Protoporphyrin-Stoffwechsels, des Hämoglobin-Stoffwechsels, des Myoglobin-Stoffwechsels, der verschiedenen Cytochrom-Stoffwechsel, der Photosynthesestoffwechsel etc. oder andere Substanzen der jeweiligen Stoffwechselwege.

Lipide umfassen z.B. gesättigte oder ungesättigte, essentielle oder nicht essentielle Fettsäuren, Acyl-CoA-Verbindungen, Triacylglyceride, Lipide der Lipogenese oder der Lipolyse, Phospholipide, z.B. Glycerophospholipide, Etherlipide, Sphingophospholipide, Glycolipide oder die Substanzen der jeweiligen Stoffwechselwege.

Hormone umfassen Steroid- oder Nichtsteroidhormone, z.B. Peptidhormone oder z.B. Eicosanoide oder Octadecanoide.

Steroide umfassen z.B. die Substanzen des Cholesterin-Stoffwechsels, Hopanoide, Pflanzensteroide, wie Phyto- und Mycosterine, Insektenhormone, Isoprenoide, Steroidhormone, Gestagene, Androgene, Östrogene, Corticosteroide oder die Substanzen der jeweiligen Stoffwechselwege.

Nucleotide und Nucleoside umfassen z.B. Desoxy- undRibonucleotide/nucleoside, deren 5'-Phosphat-Derivate, Purine, Pyrimidine oder deren Derivate, z.B. cyclisierte, methylierte und/oder acetylierte Nucleosid- oder Nucleotid-Derivate, etc. oder andere Substanzen der jeweiligen Stoffwechselwege.

Umfasst sind ebenfalls Substanzen, die in diesen Stoffwechselwegen eine Rolle spielen. Unter "andere Substanzen der jeweiligen Stoffwechselwege" werden die jeweiligen Zwischenprodukte bei der Biosynthese, beim Umsatz, Transport oder Abbau der genannten Substanzen verstanden. Eine Übersicht über viele Metaboliten ist z.B. in Michal, Biochemical Pathways, Berlin, 1999 oder in KEGG, Kyoto Enzyclopedia of Genes and Genomes, Institute of Chemical Research at Kyoto University, Japan (z.B. http://www.genome. ad.jp/dbget/ligand.html) zu finden, die ausdrücklich hier mit aufgenommen sind.

Unter dem Begriff "Wasser" wird jede Art einer wässrigen Lösung verstanden, auch z.B. deionisiertes, demineralisiertes, destilliertes oder bidestilliertes Wasser. Es können auch eine oder mehr Substanzen in dem Wasser gelöst oder damit vermischt sein, die vorzugsweise die Extraktion, Stabilität oder Löslichkeit der Inhaltsstoffe des organischen Materials verbessern, oder zu bevorzugten Eigenschaften, z.B. pH-Wert, Leitfähigkeit, Salzkonzentration usw., führen, wie z.B. in Salz- oder Pufferlösungen.

Polare Substanzen werden im Stand der Technik in der Regel in reinen oder mit Wasser oder Pufferlösungen gemischten Alkylalkoholen wie Ethanol (Sauter, 1991, Strand, 1999, Gilmour, 2000) oder Methanol (Fiehn, Anal. Chem. 2000 und Nature Biotechnology 2000, Roessner, 2000) oder in Wasser oder Pufferlösungen extrahiert.

Sehr gute Extraktionseigenschaften für polare Substanzen hat Wasser. Nachteilig ist jedoch, dass in wässrigen Lösungen zelluläre Prozesse, die in der Regel zuvor durch Einfrieren oder Gefriertrocknen gestoppt wurden, wieder aktiviert werden. Dies kann z.B. einen enzymatischen Ab- oder Umbau verschiedener Metaboliten bewirken und führt zu einer Veränderung und somit Verfälschung der Konzentrationen oder Verhältnisse innerhalb dieser Extrakte. In der Regel wird versucht, diese unerwünschten Nebenreaktionen durch Arbeiten auf Eis zu unterbinden. Dies hat jedoch sowohl für die Extraktionseffizienz als auch für die Aufarbeitung großer Probenzahlen erhebliche Nachteile. Sensitivitätsverlust und Abweichung vom tatsächlichen zellulären Zustand zum Zeitpunkt der Ernte sind unvermeidlich.

Ethanol oder Methanol werden verwendet, weil sie zum einen polare Eigenschaften haben, und somit hydrophile Inhaltsstoffe ausreichend extrahiert werden, zum anderen, weil nach Zugabe zu einem Zellextrakt aufgrund des toxischen, denaturierenden Effekts des Alkohols die Zellextrakte in ihrer Aktivität inhibiert werden. Somit kann keine weitere Umsetzung der Metaboliten erfolgen und die Zellen werden in ihrem augenblicklichen metabolischen Stadium "eingefroren". Nachteilig ist jedoch, dass einige polare Metabolitenklassen nur schlecht in Methanol oder Ethanol löslich sind. Dies führt zu einem Verlust an Sensitivität und kann auch die Reproduzierbarkeit der Ergebnisse beeinflussen.

Um die Nachteile der Extraktion in reinem Alkohol oder reinem Wasser zu überwinden, verwenden z.B. Strand, 1999 und Gilmour, 2000 für die Extraktion von Zuckern Ethanol/Wasser-Gemische und inkubieren das Ausgangsmaterial für 15 min bzw. 30 min bei 80°C in diesem Gemisch. Um die unzulängliche Extraktionseffizienz zu verbessern, folgen jeweils weitere aufwendige Extraktionsschritte: Strand, 1999 etabliert eine Extraktionskette aus somit insgesamt vier Hochtemperaturschritten: erst zwei mal mit 80 % Ethanol/20 % Hepes, dann 50 % Ethanol/50 % Hepes und schließlich 100 % Hepes, jeweils 30 min bei 80°C, Gilmour, 2000, inkubiert nach dem Hochtemperaturschritt über Nacht bei 4°C. Eine Extraktion in vier Schritten oder zusätzlich zum Hochtemperaturschritt noch über Nacht ist jedoch sehr zeit- und arbeitsaufwendig. Der Versuch, die im Vergleich zu Wasser schlechteren Extraktionseigenschaften des Ethanol durch hohe Temperaturen und lange Extraktionszeiten aufzufangen, kann zudem zu Zersetzungen der Inhaltsstoffe führen und reduziert somit die Zahl der zu detektierenden Stoffe und die Sensitivität des Systems.

Es wurde nun gefunden, dass ein einphasiges Gemisch aus 50 Vol.-% bis 90 Vol.-% Methanol und 10 Vol.-% bis zu 50 Vol.-% Wasser zu einer sehr guten Extraktionsausbeute führt. Das erfindungsgemäße Verfahren führt zu einer höheren Ausbeute als bei einer Extraktion in reinem Methanol oder Ethanol. Weiterhin ist die Stabilität des Extrakts gegenüber einer reinen Extraktion in Wasser erhöht und somit die Reproduzierbarkeit des Verfahrens wesentlich verbessert. Im Gegensatz zu der Extraktion mit Ethanol/Wasser-Gemischen ist die Ausbeute so hoch, dass ein einzelner Extraktionsschritt ausreicht, um eine sehr große Anzahl an Inhaltsstoffen zu isolieren. In Verfahren, denen der erfindungsgemäße Extraktionsschritt für die Isolation von polaren Substanzen aus Pflanzenzellen zugrunde lag, wurde die Anzahl der analysierten Substanzen nur vom Analyseverfahren limitiert. Es konnte eine sehr hohe Reproduzierbarkeit erreicht werden.

Vorzugsweise hat das in Schritt(a) verwendete Gemisch einen Anteil von mindestens 70 Vol.-% Methanol, mehr bevorzugt sind mindestens 75 Vol.-%, ebenfalls bevorzugt sind 90 Vol.-%, mehr bevorzugt sind 85 Vol.-%, am meisten bevorzugt sind 80 Vol.-% Methanol.

Ebenfalls bevorzugt sind 10 Vol.-% bis 50 Vol.-% Wasser, mehr bevorzugt sind 15 Vol.-% bis 40 Vol.-% Wasser, noch mehr bevorzugt 30 Vol.-% Wasser. Am meisten bevorzugt sind 20 Vol.-% Wasser. Am meisten bevorzugt wird somit das erfindungsgemäße Verfahren mit einem Gemisch aus 80 Vol.-% Methanol und 20 Vol.-% Wasser durchgeführt. Gegebenenfalls kann das Gemisch auch geringe Mengen eines anderen Lösungsmittels oder Lösungsmittelgemisches enthalten, z.B. Dichlormethan, bevorzugt sind jedoch weniger als 10 Vol.-%, mehr bevorzugt sind weniger als 5 Vol.-%, am meisten bevorzugt ist kein anderes Lösungsmittel in dem Gemisch.

Nach diesem ersten Extraktionsschritt für polare Substanzen kann/können ein oder mehrere weitere(r) Extraktionsschritt(e) (a') folgen mit einer Lösung mit höherem Wasseranteil oder nur mit Wasser oder mit einem anderen Alkohol, z.B. einem Alkylalkohol mit einem Alkylrest mit 1 bis 6 Kohlenstoffatomen, z.B. Methanol, Ethanol, 1-Propanol, 2-Propanol, Butanol, Pentanol, Hexanol, oder z.B. Aceton oder Acetonitril, gegebenenfalls gemischt mit Wasser oder als Gemisch verschiedener Komponenten. Am meisten bevorzugt ist Methanol oder ein Methanol/Wasser-Gemisch. Gegebenenfalls kann Schritt (a) oder (a') ein- oder mehrmals wiederholt werden.

In einer besonders bevorzugten Ausführungsform wird nur eine einmalige Extraktion nach Schritt (a) durchgeführt.

Weiterhin umfasst das erfindungsgemäße Verfahren einen Schritt (b) Extrahieren mit einem einphasigen unpolaren Lösungsmittel oder Lösungsmittelgemisch.

Das Lösungsmittel oder Lösungsmittelgemisch in Schritt (b) ist unpolarer als das Lösungsmittel oder Lösungsmittelgemisch in Schritt (a). Erfindungsgemäß ist der Polaritätsindex (nach Kellner, 1998) des Lösungsmittel oder Lösungsmittelgemisches in Schritt (b) um 0,3 oder mehr kleiner als der des Extraktionsmittels der polaren Phase in Schritt (a). Mehr bevorzugt ist der Polaritätsindex nach Kellner, 1998 0,5, noch mehr bevorzugt 1, am meisten bevorzugt um mehr als 2 kleiner als der des Extraktionsmittels der polaren Phase. Ein erfindungsgemäß eingesetztes Lösungsmittelgemisch aus 40 % Methanol/60 % Dichlormethan hat so z.B. einen Polaritätsindex von 3,9 nach Kellner, 1998.

Unpolare Lösungsmittel oder Lösungsmittelgemische wurden oben beschrieben, z.B. organische polare Lösungsmittel oder ein Gemisch aus einem oder mehr polaren Lösungsmitteln, wie z.B. Alkylalkoholen mit einem Alkylrest mit 1 bis 6 Kohlenstoffatomen, z.B. Methanol, Ethanol, 1-Propanol, 2-Propanol, Butanol, Pentanol, Hexanol oder z.B. Aceton, Acetonitril, Essigsäureethylester, Dimethylsulfoxid oder N,N-Dimethylformamid, oder anderen polaren Lösungsmitteln mit einer Polarität größer als oder gleich 0,5, wie z.B. angegeben in Küster/Thiel 1993, und einem oder mehr oben beschriebenen unpolaren organischen Lösungsmitteln, bspw. halogenhaltigen Lösungsmitteln wie Chloroform, Dichlormethan, Tetrachlorkohlenstoff oder aliphatischen Lösungsmitteln wie Hexan, Cyclohexan, Pentan, Heptan etc. oder aromatischen Lösungsmitteln, wie z.B. Toluol oder Benzol, oder Ether, wie z.B. tert.-Butylmethylether, Diethylether oder Tetrahydrofuran oder anderen Lösungsmitteln mit einer Polarität kleiner als 0,5, wie z.B. angegeben in Küster/Thiel 1993.

Bevorzugt wird in Schritt (b) eine Lösungsmittelkomponente eingesetzt, die sich nicht mit Wasser mischt, damit bei einer folgenden Phasenvereinigung anschließend die Phasentrennung in eine unpolare und eine polare Phase herbeigeführt werden kann. Bevorzugt mischt sich die Komponente jedoch mit Methanol. Ein niedriger Siedepunkt, bspw. von 100°C oder geringer, mehr bevorzugt 80°C, noch mehr bevorzugt 60°C und am meisten bevorzugt 40°C oder geringer bei Normaldruck ist weiterhin von Vorteil, weil dann das Entfernen des Lösungsmittels oder Lösungsmittelgemisches schneller und bei niedrigeren Temperaturen schonender für die Inhaltsstoffe durchgeführt werden kann.

Halogenierte Lösungsmittel sind als Lösungsmittel in Schritt (b) bevorzugt. Besonders bevorzugt ist ein Gemisch aus Methanol oder Ethanol und Chloroform, Pentan, Hexan, Heptan, Cyclohexan, Tetrachlorkohlenstoff oder Dichlormethan. Mehr bevorzugt ist ein Gemisch aus Methanol oder Ethanol mit Chloroform oder Dichlormethan. Bevorzugt besteht das Gemisch in Schritt (b) aus 30 Vol.-% bis 60 Vol.-% Methanol oder Ethanol, bevorzugt ist ein Gemisch mit 40 bis 50 Vol.-% Methanol oder Ethanol. Am meisten bevorzugt ist die Verwendung von Methanol. Vorzugsweise beträgt der Anteil an Dichlormethan oder Chloroform 40 bis 70 Vol.-%, bevorzugt ist die Verwendung von Dichlormethan. Die restlichen 0 Vol.-% bis 30 Vol.-% können optional aus einem *"*weiteren Lösungsmittel oder Lösungsmittelgemisch" bestehen, das mit dem oben genannten Gemisch eine Phase bilden, z.B. Ethanol oder Chloroform. Bevorzugt ist, dass kein "weiteres Lösungsmittel oder Lösungsmittelgemisch" enthalten ist.

Gegebenenfalls kann das Gemisch in Schritt (b) auch geringe Mengen Wasser enthalten, vorzugsweise 0 Vol.-% bis 20 Vol.-%, mehr bevorzugt sind 10 Vol.-%, noch mehr bevorzugt sind 5 Vol.-% oder weniger, am meisten bevorzugt ist kein Wasser in dem Gemisch.

In einer bevorzugten Ausführungsform umfasst das erfindungsgemäße Verfahren somit den folgenden Schritt (b): Extrahieren mit einem Gemisch aus 30 Vol.-% bis 60 Vol.-% C₁- bis C₆-Alkylalkohol, Aceton, Acetonitril, Essigsäureethylester, Dimethylsulfoxid oder N,N,-Dimethylformamid und 40 Vol.-% bis 70 Vol.-% Chloroform, Dichlormethan, Pentan, Hexan, Heptan, Cyclohexan oder Tetrachlorkohlenstoff.

Überraschenderweise wurde gefunden, dass eine besonders gute Extraktion mit einem bestimmten Verhältnis an Methanol und Dichlormethan möglich ist. Am meisten bevorzugt wird das erfindungsgemäße Verfahren in Schritt (b) daher mit einem Gemisch aus 30 bis 40 Vol.-% Methanol und 60 bis 70 Vol.-% Dichlormethan durchgeführt. Am meisten bevorzugt sind 40 Vol.-% Methanol und 60 Vol.-% Dichlormethan.

Gegebenenfalls kann der Schritt (b) ein- oder mehrmals wiederholt werden und/oder ein oder mehr weitere(r) optionale(r) Schritt(e) (b') mit einem höheren Anteil an aprotischem Lösungsmittel oder reinem aprotischen Lösungsmittel folgen.

In einer besonders bevorzugten Ausführungsform wird Schritt (b) nur einmal durchgeführt.

Die Schritte des erfindungsgemäßen Verfahrens, insbesondere die Schritte (a) und (b) können parallel, z.B. wird die Probe zunächst geteilt und werden dann beide Extrakte getrennt hergestellt, oder hintereinander durchgeführt werden, z.B. wenn dieselbe Probe nach Abtrennung des 1. Extraktionsmittels mit einem 2. Extraktionsmittel behandelt wird, wobei die Reihenfolge (a)(b) genauso möglich ist wie die Reihenfolge (b)(a), und wobei auch Zwischenschritte möglich sind. Ebenfalls möglich ist es, die Schritte mit anderen Schritten zu kombinieren. Am meisten bevorzugt ist die Reihenfolge (a)(b).

So kann mit dem erfindungsgemäßen Verfahren, das die Schritte (a) und (b), optional auch die Schritte (a') und (b'), enthält, eine große Anzahl von Proben auf polare und unpolare Metaboliten automatisiert, schnell und gut reproduzierbar für die Untersuchung vorbereitet werden.

In einem weiteren Schritt werden in dem erfindungsgemäßen Verfahren die Extrakte aus Schritt (a) und Schritt (b) nach der Extraktion vereinigt zu einem einphasigen Gemisch.

Vorteilhaft ist es, das vereinigte Gemisch aus (a) und (b) mit einem oder mehreren Analysestandards, z.B. internen Standards und/oder Chromatographiestandards zu versetzen. Solche Standards können z.B. in den natürlichen Proben nicht vorkommende, aber den analysierten Substanzen ähnliche Verbindungen, einschließlich isotopenmarkierte, radioaktiv oder Fluoreszenz-markierte Substanzen sein, wie für Zucker z.B. Ribitol oder alpha-Methylglucopyranosid, für Aminosäuren z.B. L-Glycin-2,2-d₂ oder L-Alanin-2,3,3,3-d₄, für Fettsäuren oder deren Derivate insbesondere ungeradzahlige Fettsäuren oder deren Methylester, z.B. Undecansäure-, Tridecansäure-, oder Nonacosansäuremethylester. Die Standards können auch einzeln zu dem jeweiligen Extrakt aus Schritt (a) oder (b) zugegeben werden

In einer Ausführungsform werden in dem erfindungsgemäßen Verfahren zur Extraktion Lösungsmittel oder Lösungsmittelgemische verwendet, die zusätzlich noch bis zu 5 Gew.-%, mehr bevorzugt sind bis zu 3 Gew.-%, noch mehr bevorzugt sind bis zu 1 Gew.-% Puffersalze, Säuren und/oder Basen enthalten. Bevorzugt sind flüchtige Puffersysteme. So können z.B. erfindungsgemäß Ammoniumformiat-, Ammoniumcarbonat-, Ammoniumchlorid-, Ammoniumacetat-oder Ammoniumhydrogencarbonat-Lösung und/oder eine Säure, z.B. Ameisensäure, Essigsäure, Trifluoressigsäure, Pentafluorpropansäure, Heptafluorbutansäure, Nonafluorpentansäure, Undecafluorhexansäure, Tridecafluorheptansäure oder Pentadecafluoroctansäure und/oder eine Base wie z.B. Triethylamin, Pyridin oder Ammoniak eingesetzt werden.

Besonders vorteilhaft ist es, wenn in dem erfindungsgemäßen Verfahren zur Extraktion die vereinigten Extrakte eine Phase bilden, zu der vorzugsweise dann Standards zugegeben werden können. Der Vorteil der nochmaligen einphasigen Durchmischung der beiden Extrakte vor der Phasentrennung ist, dass Reste polarer Stoffe aus der unpolaren Extraktion in die polare Phase und umgekehrt Reste unpolarer Verbindungen aus der polaren Phase in die entsprechende unpolare Phase übergehen.

Eine solches einphasiges Gemisch wird z.B. erreicht, wenn in Schritt (a) mit 80 Vol.-% Methanol und 20 Vol.-% Wasser und in Schritt (b) mit 40 Vol.-% Methanol und 60 Vol.-% Dichlormethan extrahiert wird und dann beide Extrakte kombiniert werden. Vorteilhafterweise befinden sich somit alle Inhaltsstoffe und optional z.B. die Standards in einer Phase.

Die beiden Phasen können nach dem Fachmann bekannten Verfahren getrennt werden, siehe z.B. Bligh und Dyer, Can. J. Biochem. Physiol. 1959, 37, 911-917, beispielsweise durch die Zugabe eines unpolaren, insbesondere organischen (z.B. Dichlormethan) oder eines polaren Lösungsmittels oder Lösungsmittelgemisches, insbesondere einer wässrigen Lösung, z.B. eines Puffers, oder durch Zugabe sowohl eines unpolaren als auch eines polaren Lösungsmittels oder Lösungsmittelgemisches wie sie oben beschrieben wurden. Dabei entsteht eine Phase, die die polaren Inhaltsstoffe ("polare Phase"/"polarer Extrakt") enthält und eine Phase, die die mittel- bis unpolaren Inhaltsstoffe ("unpolare Phase"/"unpolarer Extrakt") enthält. Vorzugsweise wird die Phasentrennung durch die Zugabe der für die Extraktion verwendeten Lösungsmittel erreicht, insbesondere durch die Zugabe von Methanol, Dichlormethan und/oder Wasser. Nach der Vereinigung werden die Phasen wieder getrennt und können je nach weiterer Verwendung derivatisiert und/oder analysiert werden.

Statt oder nach einer Phasentrennung kann in dem erfindungsgemäßen Verfahren eine Fraktionierung in zwei oder mehrere Fraktionen auch mittels einer Festphasenextraktion durchgeführt werden. Eine Fraktionierung in mehrere Fraktionen hat den Vorteil, dass die Derivatisierungs- und Analyseverfahren besser an die jeweiligen Substanzgruppen angepasst werden können. So werden insbesondere Fraktionen, die hauptsächlich Triglyceride enthalten, vor der Analyse z.B. zu Methylestern umgeestert. Die Festphasenextraktion eignet sich besonders gut zur Automatisierung.

In einer weiteren Ausführungsform umfasst das erfindungsgemäße Verfahren folglich einen oder mehr Schritte, um die Inhaltsstoffe, z.B. aus den gewonnenen Extrakten oder den Phasen, zu derivatisieren, chromatographieren und/oder analysieren. Bevorzugt werden die Extrakte oder die Phasen in den folgenden Schritten des erfindungsgemäßen Verfahrens derivatisiert, chromatographiert und analysiert. Um die Extrakte zu analysieren, müssen bestimmte Inhaltsstoffe je nach verwendeter Auftrennungs-und Analysemethode derivatisiert werden. So wird für eine gaschromatographische Auftrennung (GC) bevorzugt derivatisiert, während für eine flüssigchromatographische Auftrennung (LC) in der Regel keine Derivatisierung nötig ist. Gegebenenfalls ist auch ein Analyseverfahren ohne chromatographische Auftrennung möglich, z.B. Massenspektrometrie (MS), Atomabsorptionsspektrometrie (AAS) oder Kernresonanzspektrometrie (NMR).

In einer weiteren bevorzugten Ausführungsform enthält das erfindungsgemäße Verfahren zur Extraktion noch mindestens einen der folgenden weiteren Schritte:
i) Einfrieren des Materials, vorzugsweise schnelles Einfrieren des gewonnenen, z.B. geernteten, Materials;
ii) Gefriertrocknen des Materials;
iii) Homogenisieren- und Dispergieren des Materials;
iv) Eindampfen eines Extrakts oder einer Phase zur Trockene, insbesondere der polaren und der unpolaren Phase, insbesondere nach Trennung der Phasen und/oder Umesterung/Veresterung in der Phase;
v) Durchführen einer Veresterung/Umesterung in der unpolaren Phase;
vi) Durchführen einer Oximbildung in der unpolaren Phase;
vii) Durchführen einer Oximbildung in der polaren Phase;
viii) Durchführen einer Trialkylsilylierung in der unpolaren Phase; und/oder
ix) Durchführen einer Trialkylsilylierung in der polaren Phase;

Vorteilhafterweise enthält das erfindungsgemäße Verfahren die genannten Schritte einzeln, mehr bevorzugt mehrere oder am meisten bevorzugt alle, besonders bevorzugt ungefähr in der oben oder unten genannten Reihenfolge.

Es soll vermieden werden, dass bis zur Extraktion enzymatische Prozesse in den Proben ablaufen, die das Inhaltsstoffspektrum verändern.

Vorteilhaft wird daher das Material nach der Ernte sofort gekühlt, besser eingefroren, um so jede enzymatische Aktivität in der Probe oder in dem Material zu unterbinden und somit eine Veränderung in der Inhaltsstoffverteilung zu vermeiden. Bevorzugt wird das Einfrieren des Materials in weniger als 60 s, mehr bevorzugt in weniger 30 s, am meisten bevorzugt in weniger als 15 s nach dem Gewinnen oder Ernten durchgeführt. Ist das Material pflanzlich, kann die Probennahme direkt in der Phytotronkammer stattfinden. Das Material wird vorteilhaft nach der Gewinnung schnell gewogen und dann schnell und tief, z.B. in flüssigem Stickstoff, eingefroren und z.B. bei -80°C oder in flüssigem Stickstoff gelagert.

Ebenfalls vorteilhaft ist, dass das Material gefriergetrocknet wird. Durch die Gefriertrocknung wird dem Material das Wasser entzogen, so dass enzymatische Prozesse inhibiert werden. Der Einsatz der Gefriertrocknung ist besonders vorteilhaft, da die so bearbeiteten Proben bei Raumtemperatur aufbewahrt und weiterbehandelt werden können.

In einer Ausführungsform der Erfindung wird die Extraktion, z.B. die der gefriergetrockneten oder eingefrorenen Proben, durch weitere Schritte unterstützt, z.B. durch Homogenisierungs- und Dispergiertechniken (Fiehn, Anal. Chem. 2000 und Nature Biotechnology 2000, Sauter, 1991, Roessner, 2000, Bligh und Dyer, 1959, Strand, 1999 etc.).

So kann das Material z.B. durch Hitze, Schüttelmühle oder andere Mahlverfahren, Druck oder schnelle, aufeinander folgende Druckänderungen, Ultraschall-, Schockwellen-, Mikrowellen-und/oder Ultraturrax-Extraktionsschritte aufgebrochen und die Inhaltsstoffe besser extrahiert werden. Vorteilhaft ist eine Extraktionsmethode, die die Automatisierung des Verfahrens zulässt. So ist insbesondere vorteilhaft eine ASE (Accelerated Solvent Extraction), PSE (Pressurised Solvent Extraction), PFE (Pressurised Fluid Extraction) oder PLE (Pressurised Liquid Extraction) durchgeführt werden, bei der das Lösungsmittel oder Lösungsmittelgemisch unter Druck und gegebenenfalls bei höherer Temperatur durch das Material durchgedrückt wird (siehe Björklund, Trends in Analytical Chemistry 2000, 19 (7), 434-445, Richter, American Laboratory 1995, 27, 24-28, Ezzell, LC-GC 1995, 13 (5), 390-398). Bevorzugt wird die Extraktion so durchgeführt, dass die Temperatur und der Druck so angepasst werden, dass die Inhaltsstoffe nicht zersetzt werden und die Extraktionseffizienz gut ist, z.B. bei einer Temperatur von 0°C bis 200°C, vorteilhaft sind 20°C oder mehr bevorzugt sind 40°C bis 150°C, mehr bevorzugt ist 120°C oder weniger. Vorzugsweise wird das Verfahren bei 40 bar bis 200 bar, mehr bevorzugt bei 70 bar, noch mehr bevorzugt bei 100 bar bis 170 bar durchgeführt. Besonders bevorzugte Bedingungen sind somit bei einer Temperatur von 60°C bis 80°C, insbesondere 70°C und bei 110 bar bis 150 bar, insbesondere 140 bar. Die Extraktionszeit kann zwischen 30 s und 20 min liegen, bevorzugt sind 10 min, mehr bevorzugt sind 5 min oder weniger. Besonders bevorzugt ist die Verwendung einer Temperatur von 60°C bis 80°C und ein Druck von 110 bis 150 bar bei einer Extraktionszeit von weniger als 5 min. Die Extraktionsbedingungen sind somit schonender als im Stand der Technik beschrieben und führen zu höheren Ausbeuten und höherer Stabilität der isolierten Inhaltsstoffe.

Die Aufarbeitung der Extrakte kann an irgendeinem Punkt des hierin beschriebenen Verfahrens zwischen den genannten Schritten unterbrochen werden, solange die Extrakte stabil gelagert oder konserviert werden, z.B. indem die Extrakte tiefgefroren und/oder gefriergetrocknet werden. Bevorzugt ist jedoch, eine Unterbrechung der Aufarbeitung vor der Analyse zu vermeiden.

Nach der Extraktion können die Phasen in verschiedene Aliquots aufgeteilt werden und gegebenenfalls eingedampft werden, z.B. um flüchtige Säuren und Wasser zu entfernen und/oder die Proben für die folgenden Verfahrensschritte vorzubereiten, z.B. mit einem IR-Dancer (mit Infrarotstrahlung beheizte Schüttelvorrichtung unter reduziertem Druck), einer Vakuumzentrifuge oder durch Gefriertrocknung. Die Eindampfung sollte schonend geschehen, vorzugsweise bei 10°C bis 80°C, mehr bevorzugt bei 20°C bis 40°C, bevorzugt unter reduziertem Druck, je nach Lösungsmittel oder Lösungsmittelgemisch beispielsweise bei 100 mbar bis 10 mbar, vorzugsweise bei 10 mbar. Besonders bevorzugt ist bei Verwendung von Dichlormethan/Methanol und/oder Methanol/Wasser-Gemischen die Reduktion des Druckes in Stufen bis auf 10 mbar.

Ein bevorzugte Ausführungsform umfasst auch Schritte zur Auftrennung und Analyse, wobei die Phasen jeweils über eine LC, GC und/oder CE (Kapillarelektrophorese) aufgetrennt werden können. Nach GC kann eine Detektion der Inhaltsstoffe z.B. mittels EI-MS (Elektronenstoßionisation und Analyse mittels Massenspektrometer) oder CI-MS (Chemische Ionisation und Analyse mittels Massenspektrometer), Sektorfeld-, Quadrupol-, Time-of-Flight-, Ion-Trap- oder Fourier-Transform-Ion-Cyclotron-Resonance-Massenspektrometrie, FID (Flammenionisationsdetektor) oder Fourier-Transform-Infrarotspektroskopie erfolgen, nach LC z.B. mittels Sektorfeld-, Quadrupol-, Time-of-Flight-, Ion-Trap- oder Fourier-Transform-Ion-Cyclotron-Resonance-Massenspektrometrie, UV/Vis-Absorptionsdetektion, Fluoreszenz-Detektion, NMR oder Infrarotspektroskopie. Vorzugsweise umfasst das erfindungsgemäße Verfahren eine MS (Massenspektrometrie), LC/MS- (Flüssigkeitschromatographie gekoppelt an eine beliebige massenspektrometrische Detektion), GC/MS- (Gaschromatographie gekoppelt an eine beliebige massenspektrometrische Detektion) und/oder LC/MS/MS-Analyse (Flüssigkeitschromatographie gekoppelt an eine beliebige tandem-massenspektrometrische Detektion), am meisten bevorzugt eine LC/MS-, GC/MS- und/oder LC/MS/MS-Analyse.

Nach dem oben genannten Eindampfen können die erfindungsgemäß hergestellten Extrakte in HPLC-Lösungsmitteln oder -Lösungsmittelgemischen aufgenommen werden und dann in der LC analysiert werden. Als Laufmittel kommen Mischungen aus z.B. Methanol, Acetonitril oder Ethanol und/oder tert.-Butylmethylether, Tetrahydrofuran, Isopropanol oder Aceton und/oder Wasser und/oder einem Salz, wie z.B. Ammoniumformiat-, Ammoniumcarbonat-, Ammoniumchlorid-, Ammoniumacetat-, oder Ammoniumhydrogencarbonat-Lösung und/oder einer Säure, z.B. Ameisensäure, Essigsäure, Trifluoressigsäure, Pentafluorpropansäure, Heptafluorbutansäure, Nonafluorpentansäure, Undecafluorhexansäure, Tridecafluorheptansäure oder Pentadecafluoroctansäure und/oder einer Base, wie z.B. Triethylamin, Pyridin oder Ammoniak in Betracht, je nachdem, ob polare oder unpolare Extrakte aus Schritt (a) bzw. (b) aufgetrennt werden sollen. In der Regel wird eine Gradientenelution durchgeführt, vorzugsweise schließt sich eine massenspektrometrische Detektion an, z.B. eine MS- oder MS/MS-Detektion (einfache massenspektrometrische bzw. tandem-massenspektrometrische Detektion).

Zur Durchführung der GC-Analyse kann mit der unpolaren Phase und/oder der polaren Phase eine Umesterung/Veresterung, insbesondere mit Methanol oder Ethanol und dann eine Oximbildung, vorzugsweise eine Methoximierung, durchgeführt werden, wie unten beschrieben. Vorzugsweise können Standardsubstanzen, z.B. Chromatographie- und/oder interne Standards, zu jeder Probe oder dem jeweiligen Extrakt gegeben werden, z.B. eine Lösung aus ungeradzahligen, geradkettigen Fettsäuren oder Kohlenwasserstoffen. Anschließend findet eine Trialkylsilylierung der Extrakte statt, wobei die Oximierung und/oder die Trialkylsilylierung der unpolaren Phase optional ist.

Diese Schritte können so wie hierin beschrieben durchgeführt werden, aber auch einzeln mit anderen Schritten, z.B. anderen Trennungs- und Analysemethoden, wie sie oben beschrieben sind, kombiniert werden und dementsprechend angepasst werden.

In einer Ausführungsform wird in dem erfindungsgemäßen Verfahren in der polaren und/oder der unpolaren Phase der Extraktion folglich eine Veresterung/Umesterung durchgeführt. Bevorzugt wird die Veresterung/Umesterung nur in der unpolaren Phase durchgeführt. Vorzugsweise wird die erfindungsgemäße Veresterung/Umesterung der Inhaltsstoffe oder eines Teils der Inhaltsstoffe, die extrahiert wurden, durchgeführt mit einem ungesättigten oder gesättigten geradkettig, verzweigtkettigen oder ringförmigen Alkylalkohol mit 1 bis 8 Kohlenstoffatomen, z.B. Methanol, Ethanol, 1-Propanol, 2-Propanol, Butanol, Pentanol, Hexanol etc. Bevorzugt ist Methanol oder Ethanol, am meisten bevorzugt Methanol. Die Reaktionstemperatur liegt vorzugsweise zwischen 70 und 150°C, mehr bevorzugt zwischen 90 und 120°C, am meisten bevorzugt sind 100°C. Die Reaktionszeit liegt bevorzugt zwischen 0,5 h und 4 h, mehr bevorzugt zwischen 1 h und 3 h. Es können weitere Lösungsmittel, die in der Reaktion inert sind, zugegen sein, z.B. Toluol, Dichlormethan, Benzol und/oder Chloroform. Es können auch Mischungen der Alkohole und/oder inerten Lösungsmittel verwendet werden. Die Lösung kann auch 20 Vol.-% oder weniger Wasser enthalten, vorzugsweise 10 Vol.-%, mehr bevorzugt sind 5 Vol.-% oder weniger.

Vorzugsweise ist der Anteil an anderen Lösungsmitteln außer dem genannten Alkohol 20 Vol.-% bis 0 Vol.-% und möglichst gering.

In einer bevorzugten Ausführungsform wird die Veresterung/Umesterung in der polaren und/oder unpolaren Phase mit einer flüchtigen Säure als Katalysator durchgeführt, vorzugsweise mit HF, HI, HCl, BF₃, BCl₃, HBr, Ameisensäure, Essigsäure, Trifluoressigsäure oder Trichloressigsäure, mehr bevorzugt ist BF₃, BCl₃, oder HCl, am meisten bevorzugt ist HCl.

Unter "flüchtige Säure" wird eine Säure verstanden, die durch Eindampfen im wesentlichen, vorzugsweise vollständig, entfernt werden kann.

Die Verwendung einer flüchtigen, vorzugsweise leicht flüchtigen Säure, wie z.B. HCl, ist vorteilhaft Besonders bevorzugt hat die Säure einen geringeren Dampfdruck als das verwendete Lösungsmittel oder die Komponenten des Lösungsmittelgemisches oder ein mögliches Azeotrop aus allen oder einem Teil der Komponenten einschließlich der Säure selbst. Im Gegensatz zum im Stand der Technik beschriebenen Verfahren ermöglicht die Verwendung von flüchtigen Säuren, dass durch Eindampfen die Säurereste schnell und automatisierbar entfernt werden können, während im Stand der Technik die Säurereste durch Waschschritte mit anschließender Trocknung, z.B. mit einem Trocknungsmittel wie Natriumsulfat, und Filtration entfernt werden müssen. Das Verfahren ist somit wesentlich besser für eine Hochdurchsatzanalyse geeignet. Als Lösungsmittel kann für die Veresterung/Umesterung ein Alkylalkohol mit einem Alkylrest mit 1 bis 8 Kohlenstoffatomen eingesetzt werden, wie oben beschrieben, optional mit einem Anteil eines inerten Lösungsmittels oder Lösungsmittelgemisches, z.B. Chloroform, Dichlormethan, Benzol und/oder Toluol. Besonders bevorzugt ist eine Mischung aus Chloroform, Methanol, Toluol und Salzsäure.

Nach der Veresterung/Umesterung kann die Lösung zum Entfernen der Säure, vorzugsweise bis zur Trocknung, eingedampft werden, z.B. um flüchtige Säuren und Wasser zu entfernen und die Proben für die folgenden Verfahrensschritte vorzubereiten, z.B. mit IR-Dancer, Vakuumzentrifuge oder durch Gefriertrocknung. Die Eindampfung sollte schonend geschehen, vorzugsweise unter 80°C, mehr bevorzugt unter 40°C, bevorzugt unter reduziertem Druck, je nach Lösungsmittel oder Lösungsmittelgemisch beispielsweise 10 mbar. Besonders bevorzugt ist die Reduktion des Druckes in Schritten auf beispielsweise 10 mbar, bei Verwendung von Dichlormethan/Methanol und/oder Methanol/Wasser-Gemischen. Die eingesetzten Lösungsmittel oder Lösungsmittelgemische können den Trocknungsschritt unterstützen, z.B. indem sie besonders leicht flüchtig sind oder als Schlepper die Verdampfung von Wasser unterstützen, wie z.B. Toluol.

In einer weiteren bevorzugten Ausführungsform wird in dem erfindungsgemäßen Verfahren in der unpolaren und/oder polaren Phase eine Oximbildung durchgeführt. Erfindungsgemäß wird unter Oxim eine Verbindung der Struktur (I) R-ONR' verstanden, 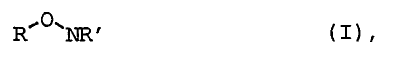 wobei R kann sein H oder ein Alkylrest, vorzugsweise ein Alkylrest mit 1 bis 6 Kohlenstoffatomen, insbesondere ein Methyl-, Ethyl-, Propyl-, Butyl-, Pentyl-, oder Hexylrest, oder ein substituierter oder unsubstituierter Arylalkylrest, vorzugsweise mit 5 bis 7 Kohlenstoffatomen im Arylalkylrest und mit 0 bis 2 Heteroatomen im Ring oder in der Kette des Arylalkylrestes, z.B. ein substituierter oder unsubstituierter Benzylrest, insbesondere ein halogenierter Benzylrest mit 1 bis 7 Halogenresten, vorzugsweise ein Pentafluorbenzylrest und wobei R' ein beliebiger zweibindiger Rest sein kann. Erfindungsgemäß können als Reaktionspartner zur Oximbildung Verbindungen der Struktur (Ib) R-ONH₂, wobei R wie oben definiert ist, vorzugsweise Hydroxylamin oder O-substituierte Hydroxylamine oder jeweils deren Salz mit einer flüchtigen Säure, z.B. Hydrochloride, wie O-Alkylhydroxylamin-Hydrochlorid oder O-Pentafluorbenzylhydroxylamin-Hydrochlorid, nach dem Fachmann bekannten Verfahren (s.a. Fiehn, Anal. Chem. 2000), z.B. gelöst in einem geeigneten Lösungsmittelgemisch oder Lösungsmittel, wie z.B. Pyridin, verwendet werden. Bevorzugt ist ein erfindungsgemäßes Verfahren, wobei zur Oximbildung O-Methyl-Hydroxylamin-Hydrochlorid (II), O-Pentafluorbenzylhydroxylamin-Hydrochlorid (III) oder O-Ethyl-Hydroxylamin-Hydrochlorid (IV) eingesetzt wird, am meisten bevorzugt ist O-Methyl-Hydroxylamin-Hydrochlorid (II).

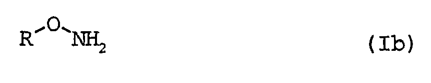

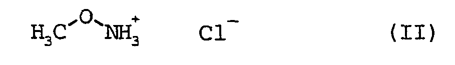

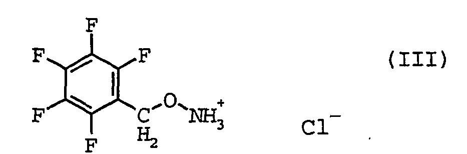

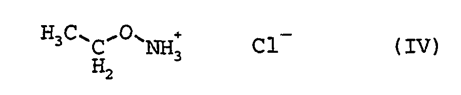

Die Reaktion kann für 30 min bis 6 h, vorzugsweise für 1 h bis 2 h durchgeführt werden, vorzugsweise bei mindestens 20°C bis 80°C, mehr bevorzugt bei 50°C bis 60°C. Besonders bevorzugt ist die Durchführung für 1 h bis 2 h bei 50°C bis 60°C.

In einer weiteren erfindungsgemäßen Ausführungsform wird in der polaren und/oder unpolaren Phase eine Trialkylsilylierung durchgeführt. Die Trialkylsilylierung kann erfindungsgemäß mit einer Verbindung der Formel Si(R¹⁻⁴)₄ durchgeführt werden, wobei R⁴ vorzugsweise ein N-C₁₋₄-Alkyl-2,2,2-Trifluoracetamid, besonders bevorzugt ein N-Methyl-2,2,2-Trifluoracetamid, ist, wie in Formel (V). Besonders bevorzugt ist somit die Trialkylsilylierung mit einer Verbindung der Formel (V) 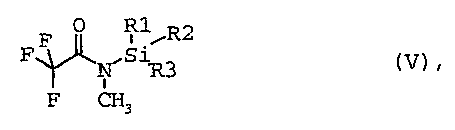 wobei R¹, R² und/oder R³ unabhängig voneinander Alkylreste mit jeweils 1 bis 6 Kohlenstoffatomen sein können, insbesondere CH₃, C₂H₅, C₃H₇ oder C₄H₉ mit folgenden Strukturformeln für C₃H₇ und C₄H₉: 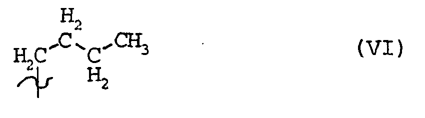 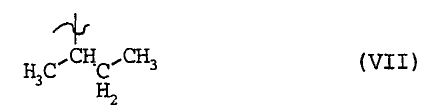 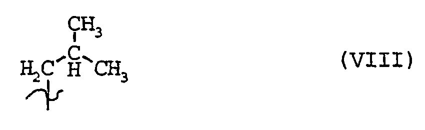 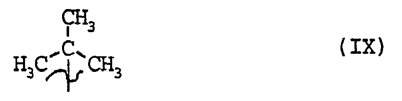 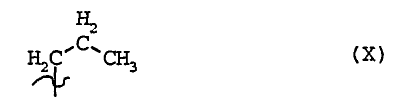 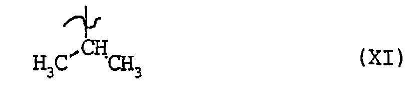 bevorzugt sind R¹ oder R² Methylreste, besonders bevorzugt sind R¹ und R² Methylreste. R³ ist bevorzugt ein geradkettiger oder verzweigter Alkylrest mit 1 bis 4 Kohlenstoffatomen wie oben beschrieben, besonders bevorzugt ein Methylrest oder tert-Butylrest, mehr bevorzugt ist R³ ein Methylrest. Vorzugsweise wird eine Trimethylsilylierung mit MSTFA (N-Methyl-N-(trimethylsilyl)-2,2,2-trifluoracetamid durchgeführt. Die Reaktion kann für 10 min bis 120 min, vorzugsweise für 20 min bis 60 min bei 20°C bis 90°C, vorzugsweise zwischen 40°C und 70°C erfolgen.

Vor der Trialkylsilylierung können vorzugsweise ein oder mehrere interne(r) Standard(s) und/oder Chromatographiestandard(s) hinzugegeben werden.

In einer besonders bevorzugten Ausführungsform besteht das Material aus pflanzlichem Material. Der wesentliche Teil des Stands der Technik beschreibt nur die Analyse aus Flüssigkeiten, nicht aus festem Material. Die Aufbereitung von Pflanzenzellen unterscheidet sich insoweit von der von tierischen Zellen oder Geweben, als.dass tierische Zellen nur eine Zellmembran besitzen, Pflanzenzellen jedoch von einer Zellwand umgeben sind. Beispielsweise können Pflanzenpopulationen oder -spezies, z.B. genetisch veränderte oder gestresste Pflanzen, extrahiert werden. Ebenfalls können Homogenate aus einer großen Anzahl an Organismen hergestellt werden. Zur Überprüfung der Empfindlichkeit, Genauigkeit, Präzision, Variabilität und Reproduzierbarkeit können Standardlösungen oder mit Standardlösungen vermischtes Material in dem Verfahren getestet werden. Dazu kann das organische Material z.B. mit definierten Mengen an Standardsubstanzen aufgestockt werden.

In einer ebenfalls bevorzugten Ausführungsform ist das erfindungsgemäße Verfahren auf hohen Durchsatz, geringe Variabilität und hohe Reproduzierbarkeit optimiert und Teil einer Hochdurchsatzanalyse.

Ein für die Hochdurchsatzanalyse optimiertes Verfahren enthält vorzugsweise einen oder mehr der folgenden weiteren Schritte:
(i) Ernten/Gewinnen des organischen Materials;
(ii) Gefriertrocknen des Materials;
(iii) Verwenden von Extraktionsgemischen in Schritt (a) und (b), die nach Vereinigung eine Phase bilden, vorzugsweise in Schritt (a) mit 80 Vol.-% Methanol und 20 Vol.-% Wasser und in Schritt (b) mit 40 Vol.-% Methanol und 60 Vol.-% Dichlormethan;
(iv) Eindampfen der Extrakte nach Phasentrennung und Umesterung/Veresterung;
(v) Durchführen einer Veresterung/Umesterung in der unpolaren Phasen mit einer flüchtigen Säure, vorzugsweise HCl; oder
(vi) Analyse der Extrakte per MS-, LC/MS-, LC/MS/MS- und/oder GC/MS-Analyse.

Diese Verfahrensschritte sind für den Hochdurchsatz und den Einsatz von Robotik optimiert und dadurch der Anteil der manuellen Arbeiten gegenüber dem Stand der Technik um mindestens 10 %, vorzugsweise 20 %, mehr bevorzugt um mehr als 30 %, am meisten bevorzugt um mindestens 50 % reduziert.

Vorteilhafterweise wird durch das erfindungsgemäße Verfahren und die dadurch bedingte Möglichkeit zur Automatisierung und Robotik die Probenverwechslungsrate um mehr als 10 %, mehr bevorzugt um mehr als 20 %, noch mehr bevorzugt um mehr als 30 %, am meisten bevorzugt um mehr als 50 % reduziert. Ebenso erreicht man durch die erfindungsgemäßen Verfahrensschritte vor einer Hochdurchsatzanalyse eine wesentlich erhöhte Reproduzierbarkeit. Die erhöhte Reproduzierbarkeit des erfindungsgemäßen Verfahrens ist durch die um mindestens 10 %, vorzugsweise 20 %, mehr bevorzugt mindestens 30 % am meisten bevorzugt mindestens 50 % geringere analytische Variabilität gekennzeichnet.

Die im Stand der Technik beschriebenen Verfahren eignen sich nicht oder nur beschränkt zu einer Hochdurchsatzextraktion von Metaboliten aus organischem Material. Bekannte diagnostische Extraktionen betreffen in erster Linie Untersuchungen von Flüssigkeiten, z.B. Urin, so dass diese Verfahren nicht für die Aufbereitung von festen Proben, insbesondere von Proben aus Pflanzenzellen, geeignet sind.

Folglich ist besonders bevorzugt ein erfindungsgemäßes Verfahren, das den Schritt (iii), mehr bevorzugt ist ein Verfahren, das die Schritte (ii) und (iii), noch mehr bevorzugt (ii), (iii) und (iv), noch mehr bevorzugt (ii), (iii), (iv) und (v) enthält. Am meisten bevorzugt ist ein Verfahren, das alle Schritte (i) bis (vi) enthält. Besonders bevorzugt ist ein Verfahren, wobei das organische Material durch eine ASE extrahiert wird. Gegebenenfalls können die Extrakte über eine Festphasenextraktion weiter fraktioniert werden.

In einer weiteren Ausführungsform ist das Verfahren Teil eines Verfahrens zur Analyse eines metabolischen Profils, vorteilhaft als Hochdurchsatzverfahren, und umfasst die obengenannten Verfahrensschritte und folgenden weiteren Schritt: Analyse der Ergebnisdaten mittels automatischer Peakerkennung und Peakintegration.

So kann das erfindungsgemäße Verfahren zur Vorbereitung der Proben beispielsweise verwendet werden, um
a) Auswirkungen genetischer Unterschiede auf das metabolische Profil,
b) den Einfluss von z.B. umgebungsbedingungen, Stress, chemische Substanzen etc.,
c) die Wechselwirkung zwischen a) und b) oder
d) den zeitlichen Verlauf von a), b) oder c) zu untersuchen,
wie z.B. in Untersuchungen des Einflusses von ein oder mehr Substanzen (z.B. auch Substanzbibliotheken) auf das metabolische Profil von z.B. genetisch möglichst identischen, genetisch verwandten bis zu genetisch möglichst unterschiedlichen Organismen.

Die vorliegende Erfindung wird durch die folgenden Beispiele verdeutlicht, ohne dass dies in irgendeiner Weise als einschränkend gilt.

### Beispiel 1

### Probennahme und Lagerung der Proben

Die Probenahme findet direkt in der Phytotronkammer statt. Die Pflanzen wurden mit einer kleinen Laborschere abgeschnitten, rasch auf einer Laborwaage gewogen, in eine vorgekühlte Extraktionshülse überführt und in ein Aluminiumrack das durch Flüssigstickstoff gekühlt ist, gesteckt. Wenn erforderlich, können die Extraktionshülsen bei -80°C im Gefrierschrank gelagert werden. Die Zeit vom Abschneiden der Pflanze bis zum Einfrieren in Flüssigstickstoff überschritt 10 - 20 s nicht.

### Beispiel 2

### Gefriertrocknung

Es wurde darauf geachtet, dass während des Versuches die Pflanzen bis zum ersten Kontakt mit Lösemitteln entweder in tiefkaltem Zustand blieben (Temperaturen < -40°C) oder durch Gefriertrocknen vom Wasser befreit wurden.

Das Aluminiumrack mit den Pflanzenproben in den Extraktionshülsen wurde in die vorgekühlte (-40°C) Gefriertrocknungsanlage gestellt. Die Anfangstemperatur während der Haupttrocknung betrug -35°C, der Druck betrug 0,120 mbar. Während der Trocknung wurden die Parameter entsprechend eines Druck- und Temperaturprogrammes verändert. Die Endtemperatur nach 12 Stunden betrug +30°C, und der Enddruck lag bei 0,001 bis 0,004 mbar. Nach dem Abschalten der Vakuumpumpe und der Kältemaschine wurde das System mit Luft (durch ein Trockenrohr getrocknet) oder Argon belüftet.

### Beispiel 3

### Extraktion

Die Extraktionshülsen mit dem gefriergetrockneten Pflanzenmaterial wurden unmittelbar nach der Belüftung des Gefriertrocknungsgerätes in die 5-mL-Extraktionskartuschen der ASE überführt.

Die 24 Probenpositionen eines ASE-Gerätes (Accelerated Solvent Extractor ASE 200 mit Solvent Controller und AutoASE-Software (Firma DIONEX)) werden mit Pflanzenproben gefüllt.

Die polaren Substanzen wurden mit ca. 10 mL Methanol/Wasser (80/20, v/v) bei T = 70°C und p = 140 bar, 5 min Aufheizphase, 1 min statische Extraktion, extrahiert. Die lipophileren Substanzen wurden mit ca. 10 mL Methanol/Dichloromethan (40/60, v/v) bei T = 70°C und p = 140 bar, 5 min Aufheizphase, 1 min statische Extraktion, extrahiert. Beide Lösemittelgemische werden in dasselbe Probengläschen (Zentrifugengläser, 50 mL mit Schraubkappe und durchstechbarem Septum für die ASE (DIONEX)) extrahiert.

Die Lösung wurde mit internen Standards versetzt: Ribitol, L-Glycin-2,2-d₂, L-Alanin-2,3,3,3-d4 und α-Methylglucopyranosid und Nonadecansäure-Methylester, Undecansäure-Methylester, Tridecansäure-Methylester, Nonacosansäure-Methylester.

Der Gesamtextrakt wurde mit 7 mL Wasser versetzt. Der feste Rückstand der Pflanzenprobe und die Extraktionshülse wurden verworfen.

Der Extrakt wurde geschüttelt und dann bei mindestens 1400 g für 5 bis 10 min zentrifugiert, um die Phasentrennung zu beschleunigen. 1 mL der überstehenden Methanol/Wasser-Phase ("polare Phase", farblos) wurde für die weitere GC-Analyse abgenommen, 1 mL wurde für die LC-Analyse entnommen. Der Rest der Methanol/Wasser-Phase wurde verworfen. Die organische Phase wurde nochmals mit demselben Volumen Wasser (7 mL) gewaschen und zentrifugiert. 0,5 mL der organischen Phase ("lipide Phase", dunkelgrün) wurde für die weitere GC-Analyse entnommen, 0,5 mL wurden für die LC-Analyse entnommen. Alle entnommenen Aliquote wurden mit dem IR-Dancer Infrarot-Vakuum-Evaporator (Hettich) zur Trockne eingedampft. Die maximale Temperatur während des Eindampf-Vorgangs überschritt dabei nicht 40°C. Der Druck im Gerät betrug nicht weniger als 10 mbar.

### Beispiel 4

### Weiterverarbeitung der Lipid-Phase für die LC/MS- oder LC/MS/MS-Analyse

Der zur Trockne eingedampfte lipide Extrakt wurde in Laufmittel aufgenommen. Der HPLC-Lauf wurde mit Gradientenelution durchgeführt.

### Beispiel 5

### Weiterverarbeitung der polaren Phase für die LC/MS- oder LC/MS/MS-Analyse

Der zur Trockne eingedampfte polare Extrakt wurde in Laufmittel aufgenommen. Der HPLC-Lauf wurde mit einer Gradientenelution durchgeführt.

### Beispiel 6

### Derivatisierung der Lipid-Phase für die GC/MS-Analyse

Zur Transmethanolyse wurde eine Mischung aus 140 µL Chloroform, 37 µL Salzsäure (37 Gew.-% HCl in Wasser), 320 µL Methanol und 20 µL Toluol zu dem eingedampften Extrakt zugefügt. Das Gefäß wurde dicht verschlossen und unter Schütteln 2 h bei 100°C erhitzt. Anschließend wurde die Lösung zur Trockne eingedampft. Der Rückstand wurde vollständig getrocknet.

Die Methoximierung der Carbonylgruppen erfolgte durch Reaktion mit Methoxyamin-Hydrochlorid (5 mg/mL in Pyridin, 100 µL) für 1,5 h bei 60°C im dicht verschlossenen Gefäß. 20 µL einer Lösung von ungeradzahligen, geradkettigen Fettsäuren wurden als Zeitstandards zugesetzt. Schließlich wurde mit 100 µL N-Methyl-N-(trimethylsilyl)-2,2,2-trifluoracetamid (MSTFA) für 30 min bei 60°C im wieder dicht verschlossenen Gefäß derivatisiert. Das Endvolumen vor der GC-Injektion war 200 µL.

### Beispiel 7

### Derivatisierung der polaren Phase für die GC/MS-Analyse

Die Methoximierung und die Trimethylsilylierung mit MSTFA erfolgte wie für die Lipid-Phase beschrieben.

## Patentansprüche

1. Verfahren zur Extraktion von Inhaltsstoffen aus organischem Material, umfassend die Schritte
(a) Extrahieren des organischen Materials oder eines Teils davon mit einem einphasigen Gemisch aus 50 Vol.-% bis 90 Vol.-% Methanol und 50 Vol.-% bis 10 Vol.-% Wasser und optional 0 Vol.-% bis 40 Vol.-% eines weiteren Lösungsmittels oder Lösungsmittelgemisches;
(b) Extrahieren des organischen Materials oder eines Teils davon mit einem einphasigen unpolaren Lösungsmittel oder Lösungsmittelgemisch, wobei der Polaritätsindex nach Kellner des unpolaren Lösungsmittelgemisches um 0.3 oder mehr kleiner ist als der des Extraktionsmittels der polaren Phase in Schritt (a), und
(c) vereinigen der Extrakte aus Schritt (a) und aus Schritt (b) zu einem einphasigen Gemisch.

2. Verfahren nach Anspruch 1, wobei Schritt (a) mit einem Gemisch aus 80 Vol.-% Methanol und 20 Vol.-% Wasser durchgeführt wird.

3. Verfahren nach Anspruch 1 oder 2, wobei Schritt (b) mit einem Gemisch aus 30 Vol.-% bis 60 Vol.-% C₁- bis C₆-Alkylalkohol, Aceton, Acetonnitril, Essigsäureethylester, Dimethylsulfoxid oder N,N,-Dimethylformamid und 40 Vol.-% bis 70 Vol.-% Chloroform, Dichlormethan, Pentan, Hexan, Heptan, Cyclohexan oder Tetrachlorkohlenstoff durchgeführt wird.

4. Verfahren nach einem der Ansprüche 1 bis 3, wobei Schritt (b) mit einem Gemisch aus 30 Vol.-% bis 70 Vol.-% Methanol und 40 Vol.-% bis 60 Vol.-% Dichlormethan durchgeführt wird.

5. Verfahren nach einem der Ansprüche 1 bis 4, wobei die Inhaltsstoffe in einem oder mehr weiteren Schritten derivatisiert, chromatographiert und/oder analysiert werden.

6. Verfahren nach einem der Ansprüche 1 bis 5, wobei das Verfahren mindestens einen der folgenden weiteren Schritte enthält:
i) Einfrieren des Materials;
ii) Gefriertrocknen des Materials;
iii) Homogenisieren und/oder Dispergieren des Materials;
iv) Eindampfen eines Extrakts oder einer Phase zur Trockene;
v) Durchführung einer Veresterung/Umesterung in der unpolare Phase;
vi) Durchführung einer Oximbildung in der unpolare Phase;
vii) Durchführung einer Oximbildung in der polaren Phase;
viii) Durchführung einer Trialkylsilylierung, wobei jeder Alkylrest 1 bis 6 Kohlenstoffatome enthält, in der unpolaren Phase; oder
ix) Durchführung einer Trialkylsilylierung, wobei jeder Alkylrest 1 bis 6 Kohlenstoffatome enthält, in der polaren Phase.

7. Verfahren nach Anspruch 6, wobei das Extrahieren bei einer Temperatur von 0°C bis 200°C und bei einem Druck von 40 bar bis 200 bar durchgeführt wird.

8. Verfahren nach Anspruch 6 oder 7, wobei eine Veresterung/Umesterung unter Katalyse_einer flüchtigen Säure durchgeführt wird.

9. Verfahren nach einem der Ansprüche 1 bis 8, wobei die zur Extraktion verwendeten Lösungsmittel oder Lösungsmittelgemische zusätzlich noch bis zu 5 Gew.-% Puffersalze, Säuren und/oder Basen enthalten.

10. Verfahren nach einem der Ansprüche 1 bis 9, wobei die Phasen jeweils über eine LC-, GC-; MS-, LC/MS-, GC/MS- und/oder LC/MS/MS-Analyse analysiert werden.

11. Verfahren nach einem der Ansprüche 1 bis 10, wobei das Material aus pflanzlichem Material besteht.

12. Verfahren nach einem der Ansprüche 1 bis 11, wobei das Verfahren Teil eines Verfahrens zur Analyse eines metabolischen Profils ist und folgenden weiteren Schritt enthält:
Analyse der Ergebnisdaten mittels automatischer Peakerkennung und Peakintegration.

## Claims

1. A process for extracting constituents from organic material, comprising the steps of
(a) extracting the organic material or part thereof with a monophasic mixture of 50% by volume to 90% by volume of methanol and 50% by volume to 10% by volume of water and, optionally, 0% by volume to 40% by volume of a further solvent or solvent mixture;
(b) extracting the organic material or part thereof with a monophasic unpolar solvent or solvent mixture, where the polarity index, as defined by Kellner, of the unpolar solvent or solvent mixture is 0.3 or more lower than that of the extractant of the polar phase in step (a), and
(c) combining the extracts of step (a) and step (b) to form a monophasic mixture.

2. The process according to claim 1, wherein step (a) is carried out with a mixture of 80% by volume of methanol and 20% by volume of water.

3. The process according to claim 1 or 2, wherein step (b) is carried out with a mixture of 30% by volume to 60% by volume of C₁- to C₆-alkyl alcohol, acetone, acetonitrile, ethyl acetate, dimethyl sulfoxide or N,N-dimethylformamide and 40% by volume to 70% by volume of chloroform, dichloromethane, pentane, hexane, heptane, cyclohexane or carbon tetrachloride.

4. The process according to any of claims 1 to 3, wherein step (b) is carried out with a mixture of 30% by volume to 70% by volume of methanol and 40% by volume to 60% by volume of dichloromethane.

5. The process according to any of claims 1 to 4, wherein, in one or more further steps, the constituents are derivatized, chromatographed and/or analyzed.

6. The process according to any of claims 1 to 5, wherein the process comprises at least one of the following further steps:
i) freezing the material;
ii) freeze-drying the material;
iii) homogenizing and/or dispersing the material;
iv) evaporating an extract or a phase to dryness;
v) carrying out an esterification/transesterification in the unpolar phase;
vi) carrying out an oxime formation in the unpolar phase;
vii) carrying out an oxime formation in the polar phase;
viii) carrying out, in the unpolar phase, a trialkylsilylation where each alkyl radical comprises 1 to 6 carbon atoms; or
ix) carrying out, in the polar phase, a trialkylsilylation where each alkyl radical comprises 1 to 6 carbon atoms.

7. The process according to claim 6, wherein extracting is carried out at a temperature of from 0°C to 200°C and at a pressure of from 40 bar to 200 bar.

8. The process according to claim 6 or 7, wherein an esterification/transesterification is carried out with a volatile acid as catalyst.

9. The process according to any of claims 1 to 8, wherein the solvents or solvent mixtures used for the extraction additionally comprise up to 5% by weight of buffer salts, acids and/or bases.

10. The process according to any of claims 1 to 9, wherein the phases are analyzed in each case via LC, GC, MS, LC/MS, GC/MS, and/or LC/MS/MS analysis.

11. The process according to any of claims 1 to 10, wherein the material is composed of plant material.

12. The process according to any of claims 1 to 11, wherein the process is part of a process for analyzing a metabolic profile and comprises the following further step:
analysis of the resulting data by automatic peak recognition and peak integration.

## Revendications

1. Procédé en vue de l'extraction de substances provenant d'un matériau organique, comprenant:
(a) l'extraction du matériau organique ou d'une partie de ce dernier à l'aide d'un mélange à une phase fait de 50 % en volume à 90 % en volume de méthanol et de 50 % en volume à 10 % en volume d'eau et, en option, de 0 % en volume à 40 % en volume d'un solvant supplémentaire ou d'un mélange de solvants ;
(b) l'extraction du matériau organique ou d'une partie de ce dernier à l'aide d'un solvant ou d'un mélange de solvants non polaire à une phase, l'indice de polarisation selon Kellner du solvant ou du mélange de solvants non polaire étant inférieur de 0,3 ou plus à celui de l'agent d'extraction de la phase polaire dans l'étape (a), et
(c) la combinaison des extraits provenant de l'étape (a) et de l'étape (b) pour former un mélange à une phase.

2. Procédé selon la revendication 1, l'étape (a) étant effectuée à l'aide d'un mélange fait de 80 % en volume de méthanol et de 20 % en volume d'eau.

3. Procédé selon la revendication 1 ou 2, l'étape (b) étant effectuée à l'aide d'un mélange fait de 30 % en volume à 60 % en volume d'alcool alkyle en C₁ à C₆, d'acétone, d'acétonitrile, d'ester éthylique de l'acide acétique, de diméthylsulfoxyde ou de N,N,-diméthylformamide et de 40 % en volume à 70 % en volume de chloroforme, de dichlorométhane, de pentane, d'hexane, d'heptane, de cyclohexane ou de tétrachlorure de carbone.

4. Procédé selon l'une quelconque des revendications 1 à 3, l'étape (b) étant effectuée à l'aide d'un mélange fait de 30 % en volume à 70 % en volume de méthanol et de 40 % en volume à 60 % en volume de dichlorométhane.

5. Procédé selon l'une quelconque des revendications 1 à 4, les substances subissant une transformation en dérivés, une chromatographie et/ou une analyse dans une ou plusieurs étapes supplémentaires.

6. Procédé selon l'une quelconque des revendications 1 à 5, le procédé contenant au moins une des étapes supplémentaires suivantes :
i) la congélation du matériau ;
ii) la lyophilisation du matériau ;
iii) l'homogénéisation et/ou dispersion du matériau ;
iv) la concentration par évaporation d'un extrait ou d'une phase jusqu'à l'état sec ;
v) l'exécution d'une estérification/d'une transestérification dans la phase non polaire ;
vi) l'exécution d'une formation d'oximes dans la phase non polaire ;
vii) l'exécution d'une formation d'oximes dans la phase polaire ;
viii) l'exécution d'une silylation en composés trialkyles, chaque radical alkyle contenant 1 à 6 atomes de carbone, dans la phase non polaire ; ou
ix) l'exécution d'une silylation en composés trialkyles, chaque radical alkyle contenant 1 à 6 atomes de carbone, dans la phase polaire.

7. Procédé selon la revendication 6, l'extraction étant effectuée à une température de 0° C à 200° C et à une pression de 40 bars à 200 bars.

8. Procédé selon la revendication 6 ou 7, une estérification/une transestérification étant effectuée sous catalyse à l'aide d'un acide volatil.

9. Procédé selon l'une quelconque des revendications 1 à 8, le solvant ou le mélange de solvants utilisé en vue de l'extraction contenant encore en sus jusqu'à 5 % en poids de sels tampon, d'acides et/ou de bases.

10. Procédé selon l'une quelconque des revendications 1 à 9, les phases étant à chaque fois analysées par l'intermédiaire d'une analyse LC, GC, MS, LC/MS, GC/MS et/ou LC/MS/MS.

11. Procédé selon l'une quelconque des revendications 1 à 10, le matériau se composant de matériau végétal.

12. Procédé selon l'une quelconque des revendications 1 à 11, le procédé étant une partie d'un procédé en vue de l'analyse d'un profil métabolique et contenant l'étape supplémentaire suivante :
l'analyse des données de résultat au moyen d'une reconnaissance automatique et d'une intégration automatique des pics.
